# EUROPÄISCHE PATENTSCHRIFT

(11) **EP 1 354 769 B1**
(45) Veröffentlichungstag und Bekanntmachung des Hinweises auf die Patenterteilung: **09.08.2006**
(21) Anmeldenummer: 02021195.9
(22) Anmeldetag: 24.09.2002
(51) Int. Cl.: B60R 21/20

(54) **Luftsackmodul und Verfahren zur Befestigung eines Gasgenerators an einer Gasgeneratorhalterung**
Airbag module and method for attaching an inflator to an inflator holder
Module de sac gonflable et procédé de fixation un générateur de gaz sur un dispositif de support d'un générateur de gaz

(30) Priorität: 09.04.2002 US 371076 P; 10.04.2002 US 371308 P; 10.04.2002 US 371480 P
(43) Veröffentlichungstag der Anmeldung: 22.10.2003
(73) Patentinhaber: Delphi Technologies, Inc., Troy, MI 48007 (US)
(72) Erfinder: Webber, James Lloyd, Shelby Township, Michigan 48316 (US); Asic, Sabina, 42369 Wuppertal (DE)
(74) Vertreter: Manitz, Finsterwald & Partner GbR

(56) Entgegenhaltungen:
- EP-A- 0 602 784
- DE-A- 19 538 594
- US-A- 5 613 700
- US-A- 5 791 682
- US-B1- 6 328 332

## Beschreibung

Die vorliegende Erfindung betrifft ein Luftsackmodul nach dem Oberbegriff des Anspruchs 1 (vgl. US 5613700 A).

In vielen Kraftfahrzeugen sind Airbags vorgesehen, um bei einer Kollision des Kraftfahrzeugs mit einem Hindernis die Insassen des Kraftfahrzeugs davor zu schützen, ungedämpft auf Gegenstände in dem Fahrgastinnenraum oder Begrenzungen des Fahrgastinnenraums aufzuprallen.

Hierzu weist ein konventioneller Airbag ein Luftsackmodul auf, das einen Gasgenerator und einen gefalteten Luftsack mit einer als Luftsackmund bezeichneten Öffnung umfasst. Bei einem Aufprall wird Gas des Gasgenerators durch den Luftsackmund in den Luftsacks geführt, wodurch der Luftsack aufgeblasen und entfaltet wird.

Der Gasgenerator wird dabei an einer Gasgeneratorhalterung des Luftsackmoduls mittels separater Befestigungsmittel wie Bolzen, Stiften oder Schrauben befestigt.

Diese Art der Befestigung hat jedoch den Nachteil, dass mit der Anzahl der Befestigungselemente auch die Anzahl der notwendigen Montageschritte bei der Montage des Gasgenerators an dem Luftsackmodul steigt und zu einem hohen Fertigungsaufwand führt.

Aus der US 5,791,682 A ist ein Luftsackmodul mit einem Führungselement an einer Gasgeneratorhalterung bekannt, das zwischen Federzungen an der Gasgeneratorhalterung angeordnet ist.

Aus der US 6,328,332 A ist ein Luftsackmodul mit einem Gasgenerator bekannt, der wenigstens ein Schnappverbindungselement und eine Gasgeneratorhalterung aufweist, die ein zu dem Schnappverbindungselement des Gasgenerators komplementäres Schnappverbindungselement aufweist, wobei die Schnappverbindungselemente so ausgebildet sind, dass der Gasgenerator mittels einer Schnappverbindung an der Gasgeneratorhalterung fixierbar ist.

Der vorliegenden Erfindung liegt die Aufgabe zugrunde, ein Luftsackmodul bereitzustellen, bei dem ein Gasgenerator auf einfache Weise an einer Gasgeneratorhalterung des Luftsackmoduls befestigbar ist.

Die Aufgabe wird gelöst durch ein Luftsackmodul mit den Merkmalen des Anspruchs 1.

Ein erfindungsgemäßes Luftsackmodul umfasst einen Gasgenerator mit wenigstens einem Schnappverbindungselement und eine Gasgeneratorhalterung für den Gasgenerator, die ein zu dem Schnappverbindungselement des Gasgenerators komplementäres Schnappverbindungselement aufweist, wobei die Schnappverbindungselemente so ausgebildet sind, dass der Gasgenerator mittels einer Schnappverbindung an der Gasgeneratorhalterung fixierbar ist.

Zur Befestigung weisen der Gasgenerator und die Gasgeneratorhaltung ein Schnappverbindungselement und ein komplementäres Schnappverbindungselement auf. Wenigstens eines von dem Schnappverbindungselement und dem komplementären Schnappverbindungselement ist dabei als federndes Schnappelement ausgebildet, während das andere entweder ebenfalls als federndes Schnappelement oder als im Wesentlichen starres Element für eine Schnappverbindung, beispielsweise in Form einer Ausnehmung oder eines Vorsprungs bzw. einer Hinterschneidung, ausgebildet sein kann.

Durch das Einschnappen des Gasgenerators in die Gasgeneratorhalterung wird eine einfache Montage des Gasgenerators ohne separate, einzeln zu handhabende weitere Befestigungselemente wie Schrauben oder Bolzen erreicht, die darüber hinaus auch schneller durchführbar ist. Schließlich werden die Kosten für die Befestigungsmittel eingespart.

Der Gasgenerator weist einen Druckbehälter und eine damit fest verbundene Aufnahme auf, und das Schnappverbindungselement ist an der Aufnahme ausgebildet. Der Druckbehälter kann einen Stoff, der bei Aktivierung des Gasgenerators ein Gas entwickelt, oder ein komprimiertes Gas enthalten, das bei Aktivierung des Gasgenerators expandiert wird. Die Aufnahme kann beispielsweise mit dem Gasgenerator verschweißt sein. Auf diese Weise kann ein konventioneller Druckbehälter verwendet werden, so dass nur die Aufnahme für die Schnappverbindung auszubilden ist. Darüber hinaus kann allgemein der Druckbehälter unabhängig von der Lage und Ausbildung des Schnappverbindungselements, und damit einfacher, gestaltet werden.

Die Aufnahme weist als Schnappverbindungselement wenigstens eine federnde Zunge auf, die einstückig mit der Aufnahme ausgebildet ist. Dies ist insbesondere dann vorteilhaft, wenn die Aufnahme aus einem dünnen Material, insbesondere einem Blech gebildet ist, so dass die Herstellung stark vereinfacht ist und gleichzeitig eine hohe Festigkeit erreicht wird. Die Zunge kann bei Verwendung von Blechen insbesondere durch Stanzen und nachfolgendes Biegen gebildet werden.

Weiterbildungen und bevorzugte Ausführungsformen der Erfindung sind in den Ansprüchen, der Beschreibung und den Zeichnungen beschrieben.

Der Gasgenerator kann beim Betrieb eines Kraftfahrzeugs, das mit dem Luftsackmodul ausgerüstet ist, insbesondere bei einem Unfall erheblichen Beschleunigungs- bzw. Verzögerungskräften ausgesetzt sein. Es ist daher bevorzugt, dass die Schnappverbindungselemente als Rastelemente ausgebildet sind. Eine solche als Rastverbindung ausgebildete Schnappverbindung kann insbesondere so ausgelegt sein, dass sie mit den beim Betrieb eines Kraftfahrzeug auftretenden Kräften auf den Gasgenerator und die Gasgeneratorhalterung und/oder ohne Werkzeuge nicht lösbar ist. Es wird so eine sichere Befestigung des Gasgenerators an der Gasgeneratorhalterung erreicht.

Weiterhin ist es besonders bevorzugt, dass die Aufnahme eine umlaufende Seitenwand aufweist, die in mehreren, insbesondere einen Kranz bildenden, federnden Zungen endet. Hierdurch wird eine gleichmäßigere Verteilung der Haltekräfte um die umlaufende Seitenwand herum erreicht. Darüber hinaus können die Zungen einfach durch Stanzen hergestellt werden, wenn die Aufnahme aus einem Blech geformt wird. Bilden die Zungen einen Kranz, können zwischen den Zungen insbesondere radial verlaufende Schlitze ausgebildet sein.

Dabei ist es besonders bevorzugt, dass die federnden Zungen in entspanntem Zustand radial über die restliche Seitenwand hervorstehen. Durch diese Ausbildung läßt sich der Gasgenerator einfach in die Gasgeneratorhalterung einschieben, wobei die Zunge oder die Zungen ohne die Verwendung von Werkzeugen gespannt werden.

Weiter ist es dabei besonders bevorzugt, dass die Gasgeneratorhalterung einen Hohlraum zur Aufnahme des Gasgenerators umfasst, und dass das komplementäre Schnappverbindungselement als Hinterschneidung in oder an einer Innenwand des Hohlraums ausgebildet ist. Eine solche Hinterschneidung ist insbesondere bei einer Gasgeneratorhalterung aus gespritztem Kunststoff oder Druckguss sehr einfach herstellbar. Insbesondere kann eine Hinterschneidung als komplementäres Schnappverbindungselement für mehrere Schnappverbindungselemente bzw. Zungen dienen, wenn sie sich über einen hinreichend langen Abschnitt erstreckt.

Besonders bevorzugt ist es, dass die Aufnahme topfförmig ausgebildet ist. Sie kann so eine sehr hohe Stabilität auch bei geringer Materialdicke einer Wandung der Aufnahme aufweisen, so dass Material und Gewicht einsparbar ist. Weiterhin kann der Druckbehälter umlaufend und von einer weiteren Seite umschlossen werden, so dass dieser besonders sicher und geschützt in der Aufnahme haltbar ist. Darüber hinaus kann die Aufnahme auch zur Führung von Gas verwendet werden, das bei einer Aktivierung des Gasgenerators aus dem Druckbehälter austritt.

Weiter ist es bevorzugt, dass wenigstens zwei zumindest in jeweils einer radialen Richtung federnde Zungen vorgesehen sind, und dass an der Gasgeneratorhalterung ein Führungselement ausgebildet ist, das bei einer Montage des Gasgenerators an der Gasgeneratorhalterung zwischen die Zungen greift. Bei dem Führungselement kann es sich insbesondere um eine Nase oder Rippe handeln, die an der Gasgeneratorhalterung angeordnet ist. Durch die so ermöglichte Führung des Gasgenerators vor und/oder bei dem Einschnappen wird eine sehr einfache Montage des Gasgenerators ermöglicht, bei der gleichzeitig die Schnappverbindungselemente bzw. Zungen und die komplementären Schnappverbindungselemente aufeinander ausgerichtet werden können. Darüber hinaus ist der Gasgenerator auch gegenüber der Gasgeneratorhalterung einfach ausrichtbar, was insbesondere von Bedeutung ist, wenn Gasaustrittsöffnungen in dem Gasgenerator auf Gasaustrittsöffnungen in einem Diffusor auszurichten sind, mit dem von dem Gasgenerator ausgestoßenes Gas in einem Luftsack des Luftsackmoduls verteilbar ist.

Nach einer Gasauslösung oder zur Entsorgung des Luftsackmoduls muss der Gasgenerator aus der Gasgeneratorhalterung entfernt werden. Es ist daher bevorzugt, dass in dem Luftsackmodul wenigstens eine Ausschnappausnehmung vorgesehen ist, durch die ohne eine sonstige Demontage des Luftsackmoduls das Schnappverbindungselement und/oder das komplementäre Schnappverbindungselement zur Lösung der Schnappverbindung erreichbar ist. Durch diese Ausschnappausnehmung, die beispielsweise als Einbuchtung oder Öffnung ausgebildet sein kann, kann dann beispielsweise ein Element von dem Schnappverbindungselement und dem komplementären Schnappverbindungselement, das federnd ausgebildet ist, in eine Lage gebracht werden, in der die Schnappverbindung gelöst ist. Vorzugsweise können alle federnden Schnappverbindungselemente und/oder alle komplementären federnden Schnappverbindungselemente über eine oder mehrere Ausschnappausnehmungen zum Lösen der Schnappverbindung erreichbar sein. Insbesondere kann hierzu ein entsprechendes Werkzeug verwendet werden. Der Gasgenerator ist dann leicht aus der Gasgeneratorhalterung entnehmbar, ohne dass einzelne Schrauben gelöst werden müssten.

Es ist bevorzugt, dass die Gasgeneratorhalterung durch einen Grundkörper des Luftsackmoduls gebildet ist. Dieser, vorzugsweise einstückig ausgebildete, Grundkörper kann insbesondere gleichzeitig der Befestigung des Luftsackmoduls und/oder der Halterung eines Luftsacks des Luftsackmoduls dienen.

Weiterhin ist es bevorzugt, dass die Gasgeneratorhalterung durch einen Diffusor des Luftsackmoduls gebildet ist. Es ergibt sich so ein besonders kompakter Aufbau des erfindungsgemäßen Luftsackmoduls, da Gas des Gasgenerators durch die Gasgeneratorhalterung direkt in den Luftsack des Luftsackmoduls verteilbar ist.

Die Erfindung ist bei beliebigen Luftsackmodulen einsetzbar, also insbesondere bei solchen mit konventionellen oder toroidalen Luftsäcken. Weiterhin kann es sich bei dem Luftsackmodul beispielsweise um ein Luftsackmodul für einen Fahrer-, Beifahrer- oder Seitenairbag handeln.

Die Erfindung wird nun weiter beispielhaft anhand der Zeichnungen erläutert. Es zeigen:
- Fig. 1: eine schematische, teilweise Schnittansicht durch einen Grundkörper und einen Gasgenerator eines Luftsackmoduls nach einer ersten bevorzugten Ausführungsform der Erfindung,
- Fig. 2: eine schematische Draufsicht auf den Gasgenerator in Fig. 1,
- Fig. 3: eine schematische Schnittansicht durch ein Luftsackmodul nach einer zweiten bevorzugten Ausführungsform der Erfindung,
- Fig. 4: eine schematische Schnittansicht durch einen Grundkörper des Luftsackmoduls in Fig. 3,
- Fig. 5: eine schematische perspektivische Ansicht des Luftsackmoduls in Fig. 3 aus einer gasgeneratorseitigen Richtung,
- Fig. 6: eine perspektivische Ansicht eines Grundkörpers des Luftsackmoduls in Fig. 3 mit einem Luftsackhalter und von Rändern eines Luftsacks des Luftsackmoduls in Fig. 3,
- Fig. 7: eine Draufsicht auf eine Abdeckung und eine Nabenabdeckung des Luftsackmoduls in Fig. 3,
- Fig. 8: eine schematische, teilweise, perspektivische Ansichten eines Entnahmewerkzeugs zur Entnahme des Gasgenerators aus dem Luftsackmodul in Fig. 3, und
- Fig. 9: eine schematische, teilweise Schnittansicht durch das Luftsackmodul in Fig. 3 mit angesetztem Entnahmewerkzeug.

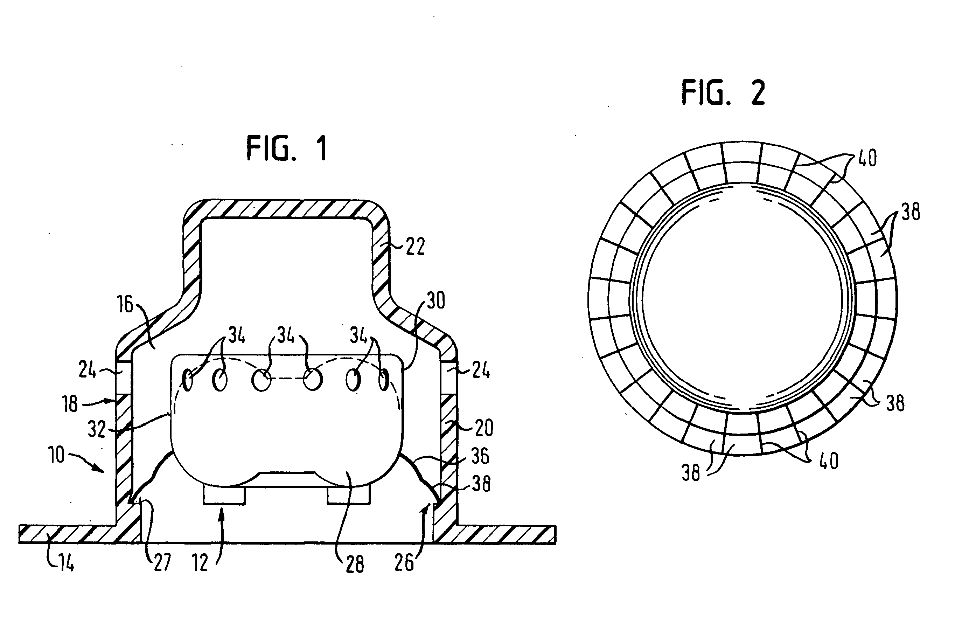

In Fig. 1 sind ein Grundkörper 10 und ein Gasgenerator 12 eines nicht vollständig gezeigten Luftsackmoduls nach einer ersten bevorzugten Ausführungsform der Erfindung gezeigt.

Der Grundkörper 10 weist einen Bodenbereich 14 zur Befestigung und eine einstückig damit ausgebildeten, einen Hohlraum 16 begrenzende, Gasgeneratorhalterung 18 auf.

Die rotationssymmetrische Gasgeneratorhalterung 18 umfasst eine hohlzylindrische Gasgeneratorhalterung 20 und einen ebenfalls hohlzylindrischen Abschlussabschnitt 22, der gegenüber dem Gasgeneratorhalterung 20 reduzierte Innen- und Außendurchmesser aufweist und an dem der Gasgeneratorhalterung 20 gegenüberliegenden Ende geschlossen ist.

In der Gasgeneratorhalterung 20 sind umlaufend erste Gasaustrittsöffnungen 24 ausgebildet.

An einem bodenseitigen Ende der Gasgeneratorhalterung 20 ist in deren Innenwand eine umlaufende Hinterschneidung 26 ausgebildet, die eine im Wesentlichen parallel zu dem Bodenbereich 14 verlaufende Rastfläche 27 aufweist.

Der Gasgenerator 12 umfasst einen konventionellen Druckbehälter 28, der einen Stoff zur Gasentwicklung enthält, und eine topfförmige Aufnahme 30, in die der Druckbehälter 28 eingeschweißt ist.

Die Aufnahme 30, die aus einem Blech hergestellt ist, weist in einer umlaufenden Seitenwand 32 zweite Gasaustrittsöffnungen 34 auf, durch die Gas aus dem Druckbehälter 28 den ersten Gasaustrittsöffnungen 24 zuführbar ist.

Ein freier Rand der zylindrischen Seitenwand 32 weist einen ausgestellten Abschnitt 36 auf, der unter Ausbildung eines Knicks in einen Kranz von umlaufend ausgebildeten, federnden Zungen 38 übergeht, die durch radial verlaufende gestanzte Schlitze 40 voneinander getrennt sind (vgl. Fig. 2) und radial über die restliche Seitenwand 32 hervorstehen.

Die federnden Zungen 38 greifen in die Hinterschneidung 26, so dass der Gasgenerator 12 in dem Grundkörper 10 gehalten ist.

Zur Montage wird der Gasgenerator 12 einfach in die Öffnung des Hohlraums 16 eingeführt, wobei die federnden Zungen 38 als Schnappelemente radial nach innen gedrückt werden. Bei Passieren der Rastfläche 27 schnappen die Zungen in die als komplementäre Schnappverbindungselemente für die Zungen 38 dienende Hinterschneidung 26, so dass der Gasgenerator 12 in der Gasgeneratorhalterung 18 eingeschnappt bzw. verrastet wird.

Durch die Ausrichtung der Rastfläche 27 kann der Gasgenerator 12 nicht mehr ohne ein Zusammendrücken der Zungen 38 entfernt werden.

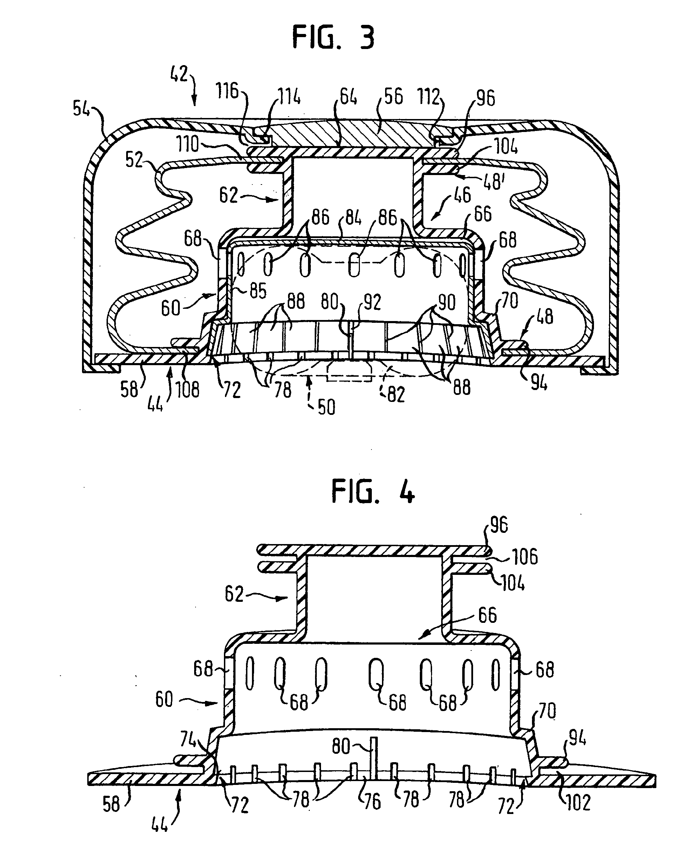

In Fig. 3 weist ein Luftsackmodul 42 nach einer zweiten bevorzugten Ausführungsform der Erfindung einen Grundkörper 44 mit einem einstückig daran ausgebildeten Luftsackhalter 46 mit Luftsackhalterabschnitten 48 und 48', einen Gasgenerator 50, einen Luftsack 52, eine Abdeckung 54 und eine Nabenabdeckung 56 auf.

Der im Wesentlichen rotationssymmetrische, einstückig als Spritzgussteil aus Polyamid ausgebildete Grundkörper 44 dient unter anderem zur Befestigung des Luftsackmoduls 42. Er weist nahe einem flanschartig ausgebildeten Boden 58 eine weite, im Wesentlichen hohlzylindrische Gasgeneratorhalterung 60 auf, an die sich ein hohlzylindrischer Abschlussabschnitt 62 mit geringerem Innen- und Außendurchmesser anschließt. Der Abschlussabschnitt 62 ist an seinem freien Ende verschlossen, wobei an einer entstehenden Abschlussfläche 64 die Nabenabdeckung 56 gehalten ist.

Die Gasgeneratorhalterung 60 weist daher einen Hohlraum 66 auf, in dem der Gasgenerator 50 angeordnet ist.

In der Gasgeneratorhalterung 60 sind umlaufend erste Gasaustrittsöffnungen 68 ausgebildet, durch die Gas des Gasgenerators 50 in den Luftsack 52 führbar ist, so dass die Gasgeneratorhalterung gleichzeitig als Diffusor dient.

Ein bodenseitiges Ende der Gasgeneratorhalterung 60 ist unter Ausbildung einer Schulter 70 kegelstumpfförmig aufgeweitet.

An dem bodenseitigen Ende einer Innenwand der Gasgeneratorhalterung 60 ist eine umlaufende Hinterschneidung 72 mit einer parallel zu dem Boden 58 angeordneten Rastfläche 74 ausgebildet (vgl. Fig. 4).

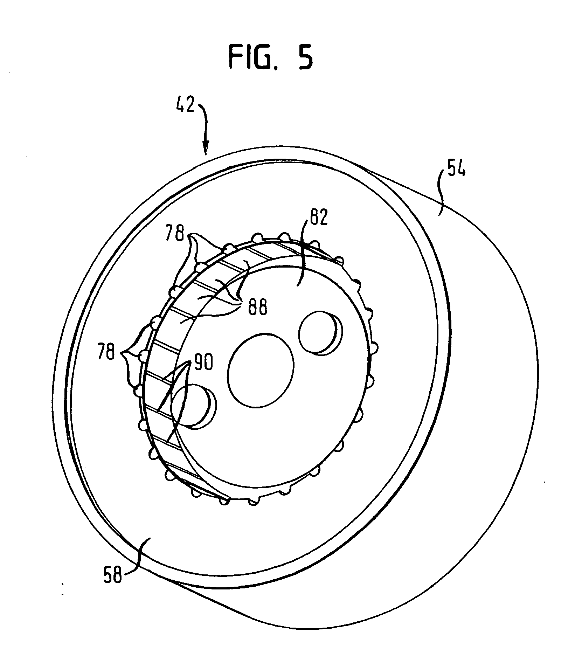

In einer durch die Rastfläche 74 und die untere Fläche des Bodens 58 gebildeten umlaufenden Leiste 76, die die Hinterschneidung 72 bildet, und einem benachbarten Bereich der Innenwand der Gasgeneratorhalterung 60 sind in vorgegebenen Winkelabständen Ausschnappausnehmungen 78 ausgebildet, die sich durch die Leiste 76 und einen Teil einer Gasgeneratorhalterungswand hindurch bis hinter die Hinterschneidung 72 erstrecken (vgl. Fig. 3, 4 und 5).

Wie in Fig. 4 erkennbar, ist zwischen zwei dieser Ausschnappausnehmungen 78 eine sich parallel zu einer Rotationsachse der Gasgeneratorhalterung 60 erstreckende Rippe 80 ausgebildet, die sich über die Hinterschneidung 72 hinweg bis in die Nähe der Schulter 70 erstreckt.

Der Gasgenerator 50 weist einen konventionellen Druckbehälter 82 auf, der Mittel zum Ausstoß von Gas zum Aufblasen des Luftsacks 52 enthält. Der Druckbehälter 82 ist in eine topfartige, aus einem Metallblech gefertigte Aufnahme 84 eingeschweißt.

Die Aufnahme 84 weist eine umlaufende, zylindrische Seitenwand 85 auf, in der zweite Gasaustrittsöffnungen 86 ausgebildet sind, die mit den ersten Gasaustrittsöffnungen 68 der Gasgeneratorhalterung 60 fluchten.

Ein Randbereich der Seitenwand 85 ist abgeknickt und setzt sich in kranzartig angeordnete, nach außen federnde Zungen fort, von denen der Übersichtlichkeit halber in den Figuren nur einige mit dem Bezugszeichen 88 versehen sind. Die Zungen 88 sind die durch Stanzen hergestellt und daher durch Schlitze 90 voneinander getrennt. Ein Schlitz 92 weist eine größere Breite auf als die anderen Schlitze 90.

Im ungespannten Zustand, wenn der Gasgenerator 50 nicht in den Grundkörper 44 eingeführt ist, stehen die Zungen 88 über die Seitenwand 85 radial hinaus.

Ist der Gasgenerator 50, wie in Fig. 3 gezeigt, in die Gasgeneratorhalterung 60 eingesetzt, greifen die Zungen 88 in die Hinterschneidung 72 in der Gasgeneratorhalterung 60 und liegen unter Spannung an dem kegelstumpfförmigen Abschnitt der Innenwand der Gasgeneratorhalterung 60 an.

Die Anzahl und der Winkelabstand der Zungen 88 entspricht dem Winkelabstand der Ausschnappausnehmungen 78, die so in Bezug auf die Zungen 88 ausgebildet sind, dass mit einem Entnahmewerkzeug durch die Ausschnappausnehmungen 78 hinter die Zungen 88 gegriffen werden kann.

Die Rippe 80 ist so breit, dass sie in den breiteren Schlitz 92 zwischen den Zungen 88, nicht aber in die schmaleren Schlitze 90 einführbar ist. Die Rippe 80 ist weiterhin so angeordnet, dass zum einen die Ausschnappausnehmungen 78 etwa in der Mitte der Zungen 88 angeordnet sind und zum anderen die ersten und zweiten Gasaustrittsöffnungen 68 bzw. 86 fluchten, wenn der Gasgenerator 50 in den Grundkörper 44 eingesetzt ist.

Der Gasgenerator 18 ist so zwischen der Hinterschneidung 72 und der Schulter 70 gehalten.

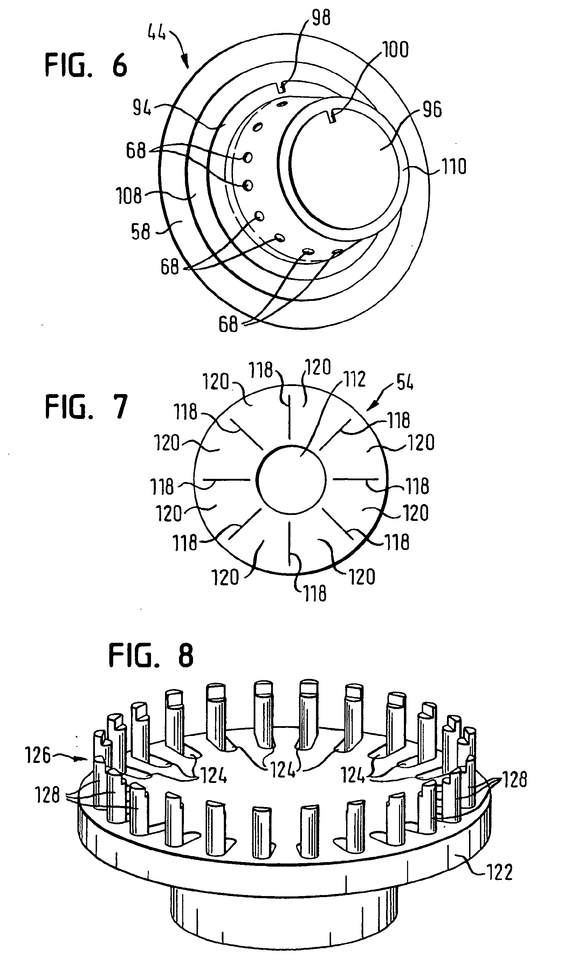

Oberhalb des Bodens 58 und fluchtend mit der Abschlussfläche 64 sind um die Gasgeneratorhalterung 60 bzw. den Abschlussabschnitt 62 umlaufende Vorsprünge 94 und 96 mit einer kreisförmigen Umfangskontur ausgebildet, die jeweils die Form eines Flanschs haben. In den Vorsprüngen 94 und 96 sind radial verlaufende, orthogonal zu der Fläche der Vorsprünge 94 bzw. 96 durch diese hindurchtretende Ausnehmungen 98 bzw. 100 in Form von Schlitzen ausgebildet, die radial jeweils bis zum Außenumfang die Gasgeneratorhalterung 60 bzw. des Abschlussabschnitts 62 reichen (vgl. Fig. 6).

Der Vorsprung 94 ist so nahe an dem Boden 58 angeordnet, dass der nahe der Gasgeneratorhalterung 60 als umlaufender Flansch ausgebildete Boden 58 mit dem Vorsprung 94 eine Nut 102 vorgegebener Weite bildet.

Auf der dem Gasgenerator 50 zugewandten Seite des Vorsprungs 96 ist ein flanschartig ausgebildeter, umlaufender komplementärer Vorsprung 104 so angeordnet, dass der Vorsprung 96 und der komplementäre Vorsprung 104 eine Nut 106 bilden, deren Weite gleich der der Nut 102 ist.

Der nur sehr schematisch gezeigte, in Fig. 1 gefaltete, konventionelle toroidale Luftsack 52 weist zwei Luftsackmünder auf, die jeweils einen Rand 108 bzw. 110 aufweisen. Die Ränder 108 bzw. 110 der Luftsackmünder sind in den Nuten 102 bzw. 106, deren vorgegebene Weite der Stärke der Ränder 108 bzw. 110 entspricht, angeordnet und hintergreifen so jeweils die Vorsprünge 94 bzw. 96, so dass die Luftsackmünder bei Entfalten des Luftsacks 52 durch Gas des Gasgenerators 50 hinter den Vorsprüngen 94 bzw. 96 und somit an den Luftsackhalterabschnitten 48 und 48' gehalten werden.

Die Durchmesser der Gasgeneratorhalterung 60, des Abschlussabschnitts 62, der entsprechenden Vorsprünge 94 bzw. 96 und der entsprechenden Luftsackmünder und die Tiefen der Ausnehmungen 98 bzw. 100 sind so gewählt, dass die Ränder 108 und 110 des Luftsacks 52 in die Ausnehmungen 98 bzw. 100 einführbar und durch Drehung um 360° hinter die Vorsprünge 94 bzw. 96 bewegbar sind.

Die Abdeckung 54 aus Polyamid ist haubenartig ausgebildet und weist in der Mitte der Haube eine kreisrunde Öffnung 112 auf, deren gekröpfter Rand 114 in eine von der Nabenabdeckung 54 und dem Vorsprung 96 gebildeten Nut 116 greift. Radial von der Öffnung 112 ausgehend sind in dem im Wesentlichen parallel zu dem Boden 58 verlaufenden Abschnitt der Abdeckung 54 radial verlaufende Sollbruchlinien 118 ausgebildet (vgl.

Fig. 3). Bei einer Entfaltung des Luftsacks 52 wird der Rand 114 aus der Nut 116 gerissen und es werden unter Bruch der Sollbruchlinien 118 Abdeckungszungen 120 gebildet und radial nach außen gebogen, so dass eine Öffnung entsteht, durch die der Luftsack 52 sich weiter entfalten kann.

Um den Gasgenerator 50 in dem Grundkörper 44 zu befestigen, wird der Gasgenerator 50 einfach in die Öffnung der Gasgeneratorhalterung 60 eingeführt, wobei die Rippe 80 führend in den Schlitz 92 greift und die schräg radial abstehenden Zungen 88 nach innen gepreßt werden.

Nach Passieren der Rastfläche 74 rasten die Zungen 88 in der Hinterschneidung 72 ein, so dass der Gasgenerator 50 durch normale, im Betrieb auftretende Kräfte nicht mehr entfernbar ist.

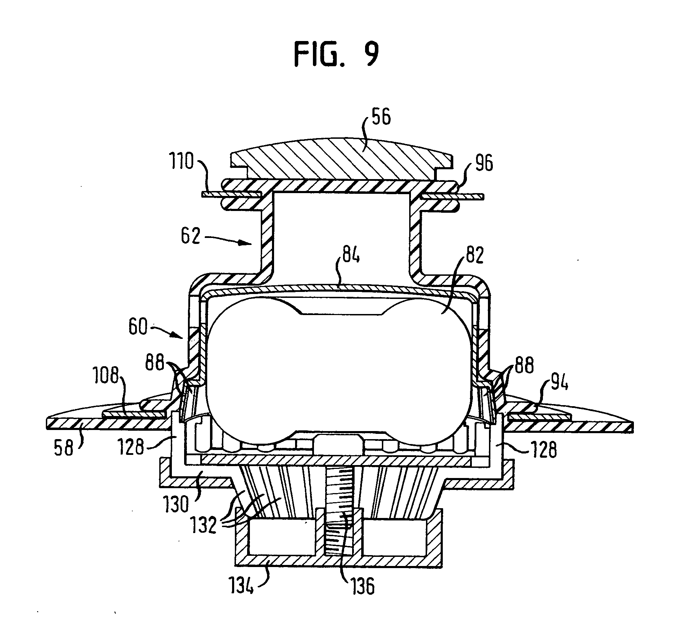

Zum Entfernen des Gasgenerators 50 aus dem Grundkörper 44 kann beispielsweise ein Entnahmewerkzeug verwendet werden, das in den Fig. 8 und 9 schematisch und teilweise gezeigt ist.

In einem aus zwei Platten gebildeten Führungskörper 122 mit kreisförmigem Querschnitt ist eine der Anzahl der Ausschnappausnehmungen 78 entsprechende Anzahl von radial verlaufenden Langlöchern 124 ausgebildet, durch die zweifach abgeknickte, zylindrische Greifer 126 geführt sind. Die äußeren Enden der Langlöcher 124 sind auf einem Kreis angeordnet, dessen Durchmesser dem Durchmesser des Kreises entspricht, auf dem die Ausschnappausnehmungen 78 angeordnet sind.

Die Greifer 126 weisen an ihren Greifenden 128 jeweils Ausnehmungen auf, die so groß sind, dass die verbleibenden, etwa halbkreisförmigen Stirnabschnitte der Greifer 126 durch die Ausschnappausnehmungen 78 hinter die Zungen 88 führbar sind und dann an diesen anliegen.

Die Greifer 126 sind ausgehend von Greifenden 128 zunächst rechtwinklig abgeknickt, wodurch radial verlaufende Verbindungsabschnitte 130 gebildet werden. Diese sind in dem Führungskörper 122 geführt.

Die Verbindungsabschnitte 130 setzen sind nach dem zweiten Knick in radial schräg aufeinander zu laufende Zugabschnitte 132 fort, die außerhalb des Führungskörpers 122 liegend insgesamt auf einem Kegel angeordnet sind (vgl. Fig. 9).

Die Zugabschnitte 130 enden in einem Topf 134, der über eine zentrale Schraubverbindung 136 mit dem Führungskörper 122 verbunden ist.

Der Innendurchmesser des Topfes 134, die Länge der Verbindungsabschnitte 130 und die Länge der Langlöcher 124 sind so gewählt, dass nach Einführen der Greifenden 128 der Greifer 126 in die Ausschnappausnehmungen 78 bei fast gelöster Schraubenverbindung 136 der Topf 134 durch eine Schraubbewegung des Topfes 134 nach oben bewegt wird und von dem Topfrand die Zugabschnitte 132 radial nach innen gezogen werden. Dadurch werden auch die Greifenden 128 radial nach innen gezogen, so dass die Zungen 88 aus der Hinterschneidung 72 herausbewegt werden. Der Gasgenerator 50 kann dann aus der Öffnung des Grundkörpers 44 entnommen werden.

### Bezugszeichenliste

- 10: Grundkörper
- 12: Gasgenerator
- 14: Bodenbereich
- 16: Hohlraum
- 18: Gasgeneratorhalterung
- 20: Gasgeneratorhalterung
- 22: Abschlussabschnitt
- 24: erste Gasaustrittsöffnungen
- 26: Hinterschneidung
- 27: Rastfläche
- 28: Druckbehälter
- 30: Aufnahme
- 32: Seitenwand
- 34: zweite Gasaustrittsöffnungen
- 36: ausgestellter Abschnitt
- 38: Zungen
- 40: Schlitze
- 42: Luftsackmodul
- 44: Grundkörper
- 46: Luftsackhalter
- 48, 48': Luftsackhalterabschnitt
- 50: Gasgenerator
- 52: Luftsack
- 54: Abdeckung
- 56: Nabenabdeckung
- 58: Boden
- 60: Gasgeneratorhalterung
- 62: Abschlussabschnitt
- 64: Abschlussfläche
- 66: Hohlraum
- 68: erste Gasaustrittsöffnungen
- 70: Schulter
- 72: Hinterschneidung
- 74: Rastfläche
- 76: Leiste
- 78: Ausschnappausnehmungen
- 80: Rippe
- 82: Druckbehälter
- 84: Aufnahme
- 85: Seitenwand
- 86: zweite Gasaustrittsöffnungen
- 88: Zungen
- 90: Schlitze
- 92: Schlitz
- 94: Vorsprung
- 96: Vorsprung
- 98: Ausnehmung
- 100: Ausnehmung
- 102: Nut
- 104: komplementärer Vorsprung
- 106: Nut
- 108: Rand
- 110: Rand
- 112: Öffnung
- 114: Rand
- 116: Nut
- 118: Sollbruchlinien
- 120: Abdeckungszungen
- 122: Führungskörper
- 124: Langlöcher
- 126: Greifer
- 128: Greifenden
- 130: Verbindungsabschnitte
- 132: Zugabschnitte
- 134: Topf
- 136: Schraubverbindung

## Patentansprüche

1. Luftsackmodul mit
einem Gasgenerator (12; 50) mit wenigstens einem Schnappverbindungselement (38; 88) und
einer Gasgeneratorhalterung (18; 60) für den Gasgenerator (12; 50), die ein zu dem Schnappverbindungselement (38; 88) des Gasgenerators (12; 50) komplementäres Schnappverbindungselement (26; 72) aufweist, wobei die Schnappverbindungselemente (26, 38; 88, 72) so ausgebildet sind, dass der Gasgenerator (12; 50) mittels einer Schnappverbindung an der Gasgeneratorhalterung (18; 60) fixierbar ist, wobei der Gasgenerator (12; 50) einen Druckbehälter (28, 82) und eine damit fest verbundene Aufnahme (30; 84) aufweist, und das Schnappverbindungselement (38; 88) an der Aufnahme (30; 84) ausgebildet ist
**dadurch gekennzeichnet,**
**dass** die Aufnahme (30; 84) als Schnappverbindungselement (38; 88) wenigstens eine federnde Zunge (38; 88) aufweist, die einstückig mit der Aufnahme (30; 84) verbunden ist, und
**dass** die Aufnahme (30; 84) eine umlaufende Seitenwand (32; 85) aufweist, die in mehreren, insbesondere einen Kranz bildenden, federnden Zungen (38, 88) endet.

2. Luftsackmodul nach Anspruch 1
**dadurch gekennzeichnet,**
**dass** die Schnappverbindungselemente (26, 28; 88, 72) als Rastelemente ausgebildet sind.

3. Luftsackmodul nach Anspruch 1 oder 2,
**dadurch gekennzeichnet,**
**dass** die federnden Zungen (38; 88) in entspanntem Zustand radial über die restliche Seitenwand (32; 85) hervorstehen.

4. Luftsackmodul nach einem der Ansprüche 1 bis 3,
**dadurch gekennzeichnet,**
**dass** die Gasgeneratorhalterung (18; 60) einen Hohlraum (16; 66) zur Aufnahme des Gasgenerators (12; 50) umfasst, und
**dass** das komplementäre Schnappverbindungselement (26; 72) als Hinterschneidung in oder an einer Innenwand des Hohlraums (16; 66) ausgebildet ist.

5. Luftsackmodul nach einem der Ansprüche 1 bis 4,
**dadurch gekennzeichnet,**
**dass** die Aufnahme (30; 60) topfförmig ausgebildet ist.

6. Luftsackmodul nach einem der Ansprüche 1 bis 5,
**dadurch gekennzeichnet,**
**dass** wenigstens zwei zumindest in jeweils einer radialen Richtung federnde Zungen (88) vorgesehen sind, und
**dass** an der Gasgeneratorhalterung (60) ein Führungselement (80) ausgebildet ist, das bei einer Montage des Gasgenerators (50) an der Gasgeneratorhalterung (60) zwischen die Zungen (88) greift.

7. Luftsackmodul nach einem der vorhergehenden Ansprüche
**dadurch gekennzeichnet,**
**dass** in dem Luftsackmodul wenigstens eine Ausschnappausnehmung (78) vorgesehen ist, durch die ohne eine sonstige Demontage des Luftsackmoduls das Schnappverbindungselement (38; 88) und/oder das komplementäre Schnappverbindungselement (26; 72) zur Lösung der Schnappverbindung erreichbar ist.

8. Luftsackmodul nach einem der vorhergehenden Ansprüche,
**dadurch gekennzeichnet,**
**dass** die Gasgeneratorhalterung (18; 60) durch einen Grundkörper des Luftsackmoduls gebildet ist.

9. Luftsackmodul nach einem der vorhergehenden Ansprüche,
**dadurch gekennzeichnet,**
**dass** die Gasgeneratorhalterung (18; 60) durch einen Diffusor (60) des Luftsackmoduls gebildet ist.

## Claims

1. An airbag module comprising
a gas generator (12; 50) having at least one snap connection element (38; 88); and
a gas generator holder (18; 60) for the gas generator (12; 50) which has a snap connection element (26; 72) complementary to the snap connection element (38; 88) of the gas generator (12; 50), with the snap connection elements (26, 38; 88, 72) being designed such that the gas generator (12; 50) can be fixed to the gas generator holder (18; 60) by means of a snap connection, wherein the gas generator (12; 50) has a pressure container (28, 82) and a mount (30; 84) fixedly connected thereto and the snap connection element (38; 88) is formed at the mount (30; 84),
**characterized in that**
the mount (30; 84) has, as a snap connection element (38; 88), at least one resilient tongue (38; 88) which is connected in one piece to the mount (30; 84); and
**in that** the mount (30; 84) has a peripheral side wall (32; 85) which ends in a plurality of resilient tongues (38, 88), in particular forming a crown.

2. An airbag module in accordance with claim 1, **characterized in that** the snap connection elements (26, 28; 88, 72) are formed as latch elements.

3. An airbag module in accordance with claim 1 or claim 2, **characterized in that** the resilient tongues (38; 88) project radially over the remaining side wall (32; 85) in the relaxed state.

4. An airbag module in accordance with any one of claims 1 to 3, **characterized in that** the gas generator holder (18; 60) includes a hollow space (16; 66) for the receiving of the gas generator (12; 50); and **in that** the complementary snap connection element (26; 72) is made as an undercut in or on an inner wall of the hollow space (16; 66).

5. An airbag module in accordance with any one of claims 1 to 4, **characterized in that** the mount (30; 60) is made in pot-like shape.

6. An airbag module in accordance with any one of claims 1 to 5, **characterized in that** at least two tongues (88) are provided which are each resilient at least in a respective radial direction; and **in that** a guide element (80) is formed at the gas generator holder (60) which engages between the tongues (88) on the installation of the gas generator (50) to the gas generator holder (60).

7. An airbag module in accordance with any one of the preceding claims, **characterized in that** at least one snap-out cut-out (78) is provided in the airbag module through which the snap connection element (38; 88) and/or the complementary snap connection element (26; 72) can be reached to release the snap connection without any other dismantling of the airbag module.

8. An airbag module in accordance with any one of the preceding claims, **characterized in that** the gas generator holder (18; 60) is formed by a base body of the airbag module.

9. An airbag module in accordance with any one of the preceding claims, **characterized in that** the gas generator holder (18; 60) is formed by a diffuser (60) of the airbag module.

## Revendications

1. Module de sac gonflable, comprenant :
un générateur de gaz (12 ; 50), comprenant au moins un élément de liaison par encliquetage (38 ; 88), et
une fixation de générateur de gaz (18 ; 60) pour le générateur de gaz (12 ; 50), présentant un élément de liaison par encliquetage (26 ; 72) complémentaire de l'élément de liaison par encliquetage (38 ; 88) du générateur de gaz (12 ; 50), les éléments de liaison par encliquetage (26, 38 ; 88, 72) étant réalisés de manière que le générateur de gaz (12 ; 50) soit susceptible d'être fixé sur la fixation de générateur de gaz (18 ; 60) au moyen d'une liaison à encliquetage, où le générateur de gaz (12 ; 50) présente un récipient à pression (28, 82) et un logement (30 ; 84) lui étant relié rigidement, et l'élément de liaison par encliquetage (38 ; 88) est réalisé sur le logement (30 ; 84),
**caractérisé en ce que**
le logement (30 ; 84), réalisé sous la forme d'élément de liaison par encliquetage (38 ; 88), présente au moins une languette (38 ; 88) élastique, reliée d'une seule pièce au logement (30 ; 84), et
**en ce que** le logement (30 ; 84) présente une paroi latérale (32 ; 85) de pourtour, s'achevant en plusieurs languettes (38, 88) élastiques, formant en particulier une couronne.

2. Module de sac gonflable selon la revendication 1, **caractérisé en ce que** les éléments de liaison à encliquetage (26, 38 ; 88, 72) sont réalisés sous la forme d'éléments à encliquetage.

3. Module de sac gonflable selon la revendication 1 ou 2, **caractérisé en ce que** les languettes (38 ; 88) élastiques, à l'état détendu, font saillie radialement sur le reste de la paroi latérale (32 ; 85).

4. Module de sac gonflable selon l'une des revendications 1 à 3, **caractérisé en ce que** la fixation de générateur de gaz (18 ; 60) comprend un espace creux (16 ; 66) pour recevoir le générateur de gaz (12 ; 50), et **en ce que** l'élément de liaison à encliquetage (26 ; 72) complémentaire est réalisé sous forme de contre-dépouille, dans ou sur une paroi intérieure de l'espace creux (16 ; 66).

5. Module de sac gonflable selon l'une des revendications 1 à 4, **caractérisé en ce que** le logement (30 ; 60) est conformé en pot.

6. Module de sac gonflable selon l'une des revendications 1 à 5, **caractérisé en ce qu'**au moins deux languettes (88) élastiques, chaque fois orientées dans une direction radiale, sont prévues et
**en ce que**, sur la fixation à générateur de gaz (60), est réalisé un élément de guidage (80) qui, lors d'un montage du générateur de gaz (50) sur la fixation de générateur de gaz (60), s'engage entre les languettes (88).

7. Module de sac gonflable selon l'une des revendications précédentes, **caractérisé en ce que** dans le module de sac gonflable est prévu au moins un évidement de décliquetage (78), à travers lequel, sans pratiquer d'autre démontage du module de sac gonflable, l'élément de liaison par encliquetage (38 ; 88) et/ou l'élément de liaison à encliquetage (26 ; 72) complémentaire est/sont accessible(s), dans le but d'annuler la liaison à encliquetage.

8. Module de sac gonflable selon l'une des revendications précédentes, **caractérisé en ce que** la fixation de générateur de gaz (18 ; 60) est formée par un corps de base du module de sac gonflable.

9. Module de sac gonflable selon l'une des revendications précédentes, **caractérisé en ce que** la fixation de générateur de gaz (18 ; 60) est formée par un diffuseur (60) du module de sac gonflable.
